# EUROPÄISCHE PATENTSCHRIFT

(11) **EP 0 795 677 B1**
(45) Veröffentlichungstag und Bekanntmachung des Hinweises auf die Patenterteilung: **14.05.2003**
(21) Anmeldenummer: 96810815.9
(22) Anmeldetag: 21.11.1996
(51) Int. Cl.: E21B 10/00, F16B 13/14, B23B 51/00

(54) **Bohrwerkzeug**
Drilling tool
Outil de forage

(30) Priorität: 16.03.1996 DE 19610442
(43) Veröffentlichungstag der Anmeldung: 17.09.1997
(73) Patentinhaber: HILTI Aktiengesellschaft, 9494 Schaan (LI)
(72) Erfinder: Ayrle, Thomas, 86830 Schwabmünchen (DE); Wachter, Hannes, 6773 Vandans (AT); Mauthe, Peter, 86842 Türkheim (DE); Schönenberger, Willy, 9476 Weite (CH); Spangenberg, Rolf, 82131 Gauting (DE)
(74) Vertreter: Wildi, Roland

(56) Entgegenhaltungen:
- US-A- 4 768 599

## Beschreibung

Die Erfindung betrifft ein Bohrwerkzeug für die Herstellung von Hinterschneidungen in einer vorgefertigten Sacklochbohrung mit einem im wesentlichen zylindrischen Schaft, einem sich entgegen der Bohrrichtung koaxial an den Schaft anschliessenden Einsteckende und mehreren den Schaft radial überragenden, entlang der Längserstreckung des Schaftes in einer Reihe hintereinander angeordneten Schneidkörpern.

Zum spreizdruckfreien Befestigen von Bauteilen an Untergründen ist es bekannt, profilierte Ankerstangen mittels einer chemischen, aushärtbaren Klebemasse in vorgefertigten Sacklochbohrungen des Untergrundes festzulegen. Für die Herstellung dieser Sacklochbohrungen können diamantbestückte Hohlbohrkronen verwendet werden. Die Rauhtiefe der Bohrlochwand kann in Abhängigkeit vom Material des Untergrundes sehr klein sein. Damit eine gute Übertragung hoher, an der Ankerstange angreifender Zugkräfte über die Klebemasse auf den Untergrund erfolgen kann, ist es von Vorteil, wenn die Klebemasse im ausgehärteten Zustand formschlüssig mit der Bohrlochwand zusammenwirkt. Es ist daher notwendig, wenigstens einen Teil der Bohrlochwand aufzurauhen bzw. mit einer Profilierung zu versehen.

Aus der EP 0 289 988 A1 ist ein Bohrwerkzeug bekannt, dessen Schaft mehrere, den Schaft radial überragende, entlang der Längserstreckung des Schaftes in einer Reihe hintereinander angeordnete Schneidkörper aufweist. Ein mit einem Bohrgerät in Verbindung bringbares, gegenüber dem Schaft koaxial angeordnetes Einsteckende schliesst sich entgegen der Bohrrichtung an den Schaft an.

Wenn das Bohrwerkzeug von einem Bohrgerät in Drehbewegung versetzt wird, führt das Bohrwerkzeug aufgrund der einseitig angeordneten Schneidkörper eine unwuchte Drehbewegung aus, so dass sich Hinterschneidungen in der Bohrlochwand der Sacklochbohrung herstellen lassen, die sich zumindest über einen Teil des Umfanges der Bohrlochwand erstrecken. In Verbindung mit einer aushärtbaren Klebemasse lassen sich Ankerstangen unter Bildung des vorgenannten Formschlusses in solchen Sacklochbohrungen verankern.

Da bei diesem bekannten Bohrwerkzeug der Betrag der Abstände zwischen jeweils zwei benachbarten Schneidkörpern gleich gross ist, verteilt sich eine über die Ankerstange und die aushärtbare Klebemasse auf die Bohrlochwand der Sacklochbohrung wirkende Zugkraft gleichmässig über die gesamte Länge der Sacklochbohrung. Das bedeutet, dass in einem Mündungsbereich der Sacklochbohrung hohe Zugkräfte in den Untergrund eingeleitet werden. Dies kann zu Ausbrüchen im Mündungsbereich der Sacklochbohrung und somit zu einem Versagen des Befestigungspunktes führen.

Der Erfindung liegt die Aufgabe zugrunde, ein einfach und wirtschaftlich herstellbares Bohrwerkzeug zu schaffen, mit dem die Voraussetzung für eine sichere Verankerung einer Ankerstange in einer Sacklochbohrung mittels einer chemischen, aushärtbaren Masse geschaffen werden kann.

Erfindungsgemäss wird die Aufgabe dadurch gelöst, dass der Betrag der Abstände zwischen jeweils zwei benachbarten, dem Einsteckende näher liegenden Schneidkörpern grösser ist als der Betrag der Abstände zwischen jeweils zwei benachbarten, vom Einsteckende entfernteren Schneidkörpern.

Mit dem erfindungsgemässen Bohrwerkzeug, bei dem vorteilhafterweise der Betrag der Abstände zwischen jeweils zwei benachbarten, dem Einsteckende näher liegenden Schneidkörpern grösser ist als der Betrag der Abstände zwischen jeweils zwei benachbarten, vom Einsteckende entfernteren Schneidkörpern ist es möglich, die meisten der von dem Bohrwerkzeug herstellbaren Hinterschneidungen in einem Bereich anzuordnen, der dem Grund der Sacklochbohrung nahe liegt. Damit wird sichergestellt, dass der grösste Anteil der an der Ankerstange angreifenden Zugkraft über die Klebemasse im Bereich nahe des Grundes der Sacklochbohrung in den Untergrund eingeleitet wird. Grosse Zugkräfte im Mündungsbereich der Sacklochbohrung werden dadurch vermieden.

Die Abstände der einzelnen Schneidkörper voneinander hängen ab von der Grösse der aufzunehmenden Zugkraft, von der Tiefe der Sacklochbohrung und von der Festigkeit des die Sacklochbohrung aufweisenden Untergrundes. Vorzugsweise entspricht der Betrag des grössten Abstands zwischen jeweils zwei benachbarten Schneidkörpern dem 1,5- bis 4-fachen Betrag des kleinsten Abstandes zwischen jeweils zwei benachbarten Schneidkörpern. Beispielsweise sind die Beträge der Abstände zwischen den Schneidkörpern bei Sacklochbohrungen mit grosser Tiefe grösser als bei Sacklochbohrungen mit geringerer Tiefe. Je nach Anwendungsfall kann eine Zunahme der Beträge der Abstände konstant oder nicht konstant erfolgen.

Die Tiefe der Hinterschneidungen ist abhängig von dem radialen Überstand der Schneidkörper gegenüber dem Schaft. Von der Festigkeit der ausgehärteten Klebemasse hängt es ab, wie tief die Hinterschneidungen ausgebildet sein können. So haben beispielsweise diese Hinterschneidungen eine grosse Tiefe, wenn die Klebemasse eine hohe Festigkeit aufweist. Ist hingegen die Festigkeit der Klebemasse eher gering, so sind die Hinterschneidungen beispielsweise weniger tief ausgebildet und liegen näher beieinander. Zweckmässigerweise entspricht der Betrag des radialen Überstandes der Schneidkörper gegenüber dem Schaft dem 0,05- bis 0,20-fachen Durchmesser des Schaftes. Die Schneidkörper sind beispielsweise aus Hartmetall gebildet.

Die der Herstellung der Hinterschneidungen dienenden Schneidkörper unterliegen einem Verschleiss. Daher ist es notwendig, die Schneidkörper von Zeit zu Zeit auszuwechseln. Ein schnelles Auswechseln der Schneidkörper wird zweckmässigerweise mit Hilfe einer Leiste erreicht, in der die Schneidkörper befestigt sind und die in eine entsprechend ausgebildete Vertiefung des Schaftes einsetzbar ist. Beispielsweise haben die Querschnitte der Leiste und der Vertiefung am Schaft die Form eines "Schwalbenschwanzes", so dass die Leiste in der Vertiefung des Schaftes radial festlegbar ist. Durch eine einseitig offene Ausgestaltung der sich parallel zur Längserstreckung des Schaftes erstreckenden Vertiefung wird ein Auswechseln der Leiste gewährleistet. Die Schneidkörper sind beispielsweise mittels einer Lötverbindung an der Leiste festlegbar.

Das erfindungsgemässe Bohrwerkzeug zeichnet sich vorteilhafterweise dadurch aus, dass eine bohrrichtungsseitige Stirnfläche des Schaftes in Bohrrichtung von einer gegenüber dem Schaft und dem Einsteckende exzentrisch angeordneten, den Schneidkörpern diametral gegenüberliegenden Bohrspitze überragt wird. Die sich am Grund der Sacklochbohrung abstützende Bohrspitze bildet einen Drehpunkt, um den sich das Bohrwerkzeug mit Unwucht dreht, wenn dieses von einem entsprechenden Bohrgerät in Drehbewegung versetzt wird. Wenn der Schaft beispielsweise zylindrisch ausgebildet ist, kommen die am Schaft angeordneten Schneidkörper gleichzeitig mit der Bohrlochwand der Sacklochbohrung in Berührung und stellen mehrere Hinterschneidungen mit der gleichen Tiefe her, die sich kreissegmentartig über einen Teil des Umfangs der Bohrlochwand erstrecken.

Das erfindungsgemässe Bohrwerkzeug zeichnet sich zweckmässigerweise dadurch aus, dass sich die senkrecht zur Längserstreckung des Schaftes verlaufenden Querschnittsflächen des Schaftes zu beiden Enden des Schaftes hin verjüngen. Mit diesem erfindungsgemässen Bohrwerkzeug ist es beispielsweise möglich, Hinterschneidungen herzustellen, die in den beiden Endbereichen des Schaftes weniger tief ausgebildet sind, als in dem mittleren Bereich des Schaftes.

Aus Gründen der Herstellung und der Festigkeit des Bohrwerkzeuges entspricht vorzugsweise die grösste Querschnittsfläche im mittleren Bereich des Schaftes dem 1,1- bis 1,3-fachen der kleinsten Querschnittsflächen in den Endbereichen des Schaftes.

Um eine Kerbwirkung in der ausgehärteten Klebemasse im Übergangsbereich zwischen den Hinterschneidungen und der Bohrlochwand verhindern zu können, sind die Schneidkörper beispielsweise zylindrisch ausgebildet und weisen eine im wesentlichen kegelförmige Schneidspitze auf, deren Verjüngung zur Spitze hin abnimmt. Hinterschneidungen, die mit derartigen Schneidkörpern geschaffen werden, sind im Übergangsbereich gerundet ausgebildet.

Die Erfindung wird anhand von Zeichnungen, die zwei Ausführungsbeispiele wiedergeben, näher erläutert. Es zeigen:
- Fig. 1: ein erfindungsgemässes Bohrwerkzeug für die Herstellung von Hinterschneidungen in einer vorgefertigten Sacklochbohrung, teilweise geschnitten;
- Fig. 2: einen Schnitt durch das Bohrwerkzeug entlang der Linie II-II gemäss Fig. 1;
- Fig. 3: ein weiteres erfindungsgemässes Bohrwerkzeug für die Herstellung von Hinterschneidungen in einer vorgefertigten Sacklochbohrung.

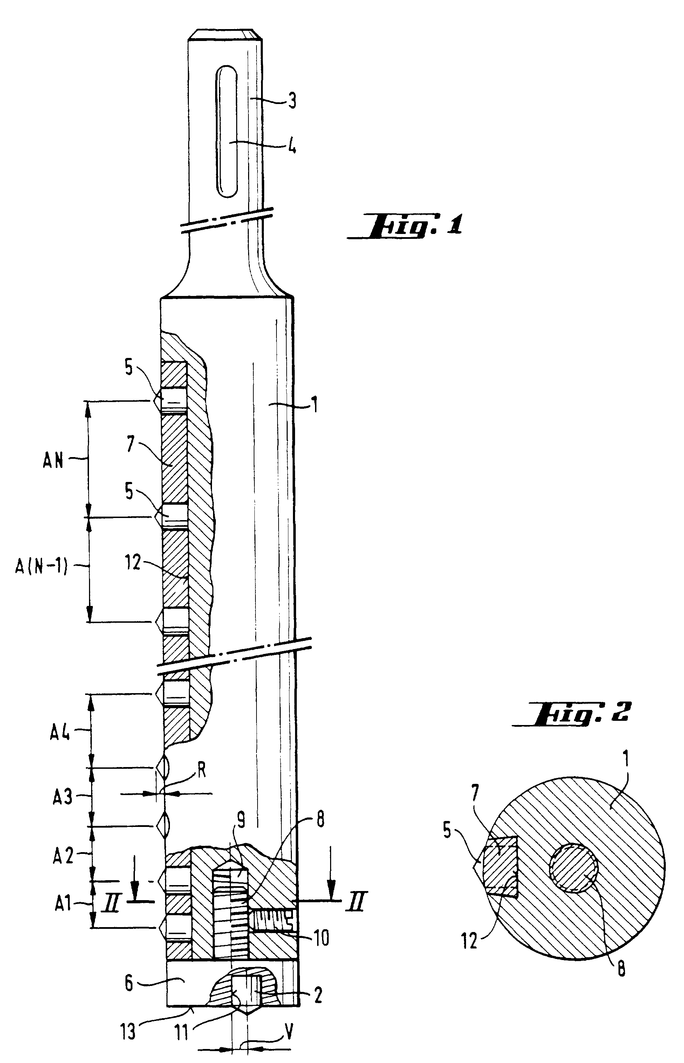

Die in den Fig. 1, 2 und 3 dargestellten Bohrwerkzeuge dienen der Herstellung von Hinterschneidungen 28 in einer vorgefertigten Sacklochbohrung 26. Diese Bohrwerkzeuge weisen einen Schaft 1, 21, ein sich entgegen der Bohrrichtung koaxial an den Schaft 1, 21 anschliessendes Einsteckende 3, 23 und mehrere, den Schaft 1, 21 radial überragende, entlang der Längserstreckung des Schaftes 1, 21 in einer Reihe hintereinander angeordnete, Schneidkörper 5, 25 auf. Die Schneidkörper 5, 25 sind zylindrisch ausgebildet und weisen eine kegelförmige Schneidspitze auf.

Das Einsteckende 3, 23 ist mit einem nicht dargestellten Bohrgerät in Verbindung bringbar. Der axialen Verriegelung und drehfesten Verbindung des Bohrwerkzeuges gegenüber dem Bohrgerät dient eine beidseitig axial geschlossene Längsnut 4, 24 im Bereich des Einsteckendes 3, 23.

Der Betrag der Abstände A2, A3, A4, A(N-1), AN zwischen jeweils zwei benachbarten, dem Einsteckende 3, 23 näher liegenden Schneidkörpern 5, 25 ist grösser als der Betrag der Abstände A1, A2, A3, A4, A(N-1) zwischen jeweils zwei benachbarten, vom Einsteckende 3, 23 entfernteren Schneidkörpern 5, 25. Die Abstände A1, A2, A3, A4, A(N-1), AN hängen von der Grösse der aufzunehmenden Zugkraft, von der Tiefe der Sacklochbohrung 26 und von der Festigkeit des die Sacklochbohrung 26 aufweisenden Untergrundes U ab. Der Betrag des grössten Abstandes AN zwischen jeweils zwei benachbarten Schneidkörpern 5, 25 entspricht dem 1,5- bis 4-fachen Betrag des kleinsten Abstandes A1 zwischen jeweils zwei benachbarten Schneidkörpern 5, 25. Der kleinste Abstand A1 kann beispielsweise 6 mm betragen, bei einer Sacklochtiefe von 60mm bis 100 mm.

Der Schaft 1 des in den Fig. 1 und 2 dargestellten Bohrwerkzeuges ist zylindrisch ausgebildet. Eine bohrrichtungsseitige Stirnfläche 13 des Schaftes 1 wird in Bohrrichtung von einer den Schneidkörpern 5 diametral gegenüberliegenden, gegenüber dem Schaft 1 und dem Einsteckende 3 exzentrisch angeordneten Bohrspitze 2 überragt. Die gegenüber einer Längsachse des Schaftes 1 um den radialen Versatz V angeordnete Bohrspitze 2 ist in einer exzentrisch angeordneten Aufnahmebohrung 11 eines Exzenterelementes 6 mittels einer Lötverbindung befestigt.

Das lösbar am Schaft 1 angeordnete Exzenterelement 6 weist ein Aussengewinde 8 auf, das mit einem entsprechenden, zentrisch am Schaft 1 angeordneten Gegengewinde 9 in Verbindung bringbar ist. Parallel zur Längserstreckung des Aussengewindes 8 überragt die Bohrspitze 2 die dem Aussengewinde 8 gegenüberliegende Seite des Exzenterelementes 6. Eine Sicherung gegen selbständiges Verdrehen des Exzenterelementes 6 gegenüber dem Schaft 1 bildet ein Klemmelement 10 in Form eines Gewindestiftes, das in einer senkrecht zur Längserstreckung des Gegengewindes 9 verlaufenden Gewindebohrung angeordnet ist und gegen das Exzenterelementes 6 im Bereich des Aussengewindes 8 drückt.

Eine der Aufnahme der Schneidkörper 5 dienende Leiste 7 befindet sich in einer Vertiefung 12 in Form einer Längsnut, die zur bohrrichtungsseitigen Stirnfläche 13 hin offen ausgebildet ist. Dadurch wird das Auswechseln der Leiste 7 gewährleistet. Das axiale Festlegen der Leiste 7 gegenüber dem Schaft 1 erfolgt mit Hilfe des Exzenterelementes 6, das die bohrrichtungsseitige Öffnung der Vertiefung 12 verschliesst.

Die in Fig. 2 dargestellten Querschnittsflächen der Leiste 7 und der Vertiefung 12 haben die Form eines "Schwalbenschwanzes", so dass die Leiste 7 in der Vertiefung 12 des Schaftes 1 radial festlegbar ist. Die Schneidkörper 5 sind mittels einer Lötverbindung in der Leiste 7 befestigt. Über die Anordnung der Schneidkörper 5 in der Leiste 7, bzw. den radialen Überstand der Schneidkörper 5 gegenüber der Leiste 7 ist die Tiefe der Hinterschneidungen beeinflussbar.

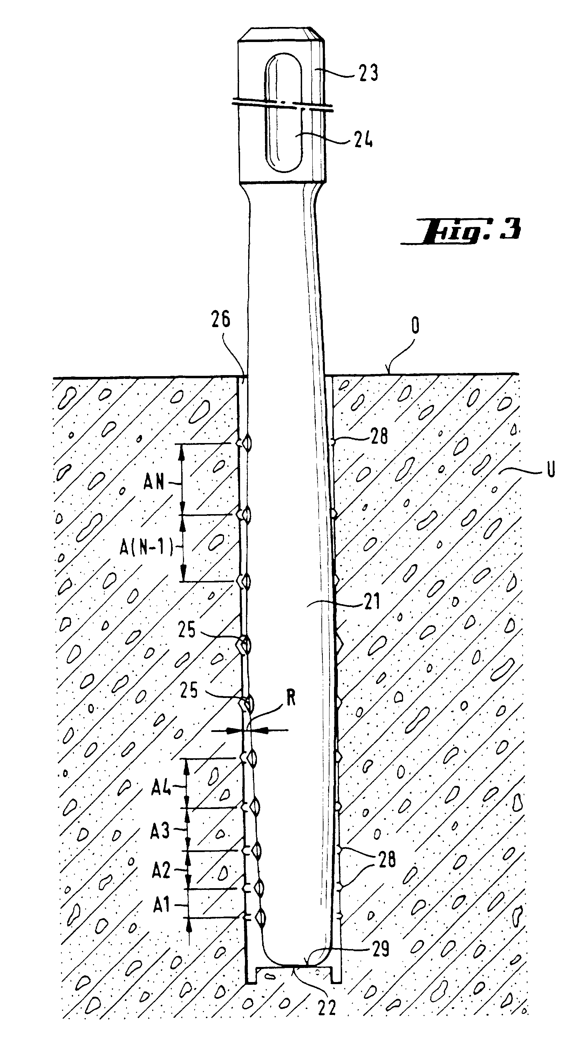

Das in Fig. 3 dargestellte Bohrwerkzeug ragt bis zum Grund einer vorgefertigten Sacklochbohrung 26. Diese mittels einer nicht dargestellten, diamantbestückten Hohlbohrkrone hergestellte Sacklochbohrung 26 befindet sich in einem, eine Oberfläche O aufweisenden Untergrund U, der im vorliegenden Beispiel aus Beton besteht.

Die senkrecht zur Längserstreckung des Schaftes 21 verlaufenden Querschnittsflächen des Schaftes 21 verringern sich zu beiden Enden des Schaftes 21 hin. Das bohrrichtungsseitige freie Ende des Schaftes 21 wird von einer nach aussen gewölbten Stirnfläche 22 gebildet. Die grösste Querschnittsfläche im mittleren Bereich des Schaftes 21 entspricht dem 1,1- bis 1,3-fachen der kleinsten Querschnittsflächen in den Endbereichen des Schaftes 21.

Der Durchmesser der Sacklochbohrung 26 entspricht im wesentlichen dem Durchmesser des Schaftes 21 im Bereich der grössten Querschnittsfläche und dem Betrag, um den die Schneidkörper 25 den Schaft 21 radial überragen. Der radiale Überstand R der an dem Schaft 21 angeordneten Schneidkörper 25 ist einheitlich und beträgt beispielsweise 2 mm, bei einem Durchmesser des Schaftes 21 von 10 mm bis 35 mm.

## Patentansprüche

1. Bohrwerkzeug für die Herstellung von Hinterschneidungen in einer vorgefertigten Sacklochbohrung (26) mit einem im wesentlichen zylindrischen Schaft (1, 21), einem sich entgegen der Bohrrichtung koaxial an den Schaft (1, 21) anschliessenden Einsteckende (3, 23) und mehreren den Schaft (1, 21) radial überragenden, entlang der Längserstreckung des Schaftes (1, 21) in einer Reihe hintereinander angeordneten Schneidkörpern (5, 25), **dadurch gekennzeichnet, dass** der Betrag der Abstände (A2, A3, A4, A(N-1), AN) zwischen jeweils zwei benachbarten, dem Einsteckende (3, 23) näher liegenden Schneidkörpern (5, 25) grösser ist als der Betrag der Abstände (A1, A2, A3, A4, A(N-1)) zwischen jeweils zwei benachbarten, vom Einsteckende (3, 23) entfernteren Schneidkörpern (5, 25).

2. Bohrwerkzeug nach Anspruch 1, **dadurch gekennzeichnet, dass** der Betrag des grössten Abstands (AN) zwischen jeweils zwei benachbarten Schneidkörpern (5, 25) dem 1,5- bis 4-fachen Betrag des kleinsten Abstandes (A1) zwischen jeweils zwei benachbarten Schneidkörpern (5, 25) entspricht.

3. Bohrwerkzeug nach Anspruch 1 oder 2, **dadurch gekennzeichnet, dass** der Betrag des radialen Überstandes (R) der Schneidkörper (5, 25) gegenüber dem Schaft (1, 21) dem 0,05- bis 0,20-fachen Durchmesser des Schaftes (1, 21) entspricht.

4. Bohrwerkzeug nach einem der Ansprüche 1 bis 3, **dadurch gekennzeichnet, dass** die Schneidkörper (5) in einer Leiste (7) angeordnet sind, die in eine entsprechend ausgebildete Vertiefung (12) des Schaftes (1) einsetzbar ist.

5. Bohrwerkzeug nach einem der Ansprüche 1 bis 4, **dadurch gekennzeichnet, dass** die bohrrichtungsseitige Stirnfläche (13) des Schaftes (1) in Bohrrichtung von einer gegenüber dem Schaft (1) und dem Einsteckende (3) exzentrisch angeordneten, den Schneidkörpern (5) diametral gegenüberliegenden Bohrspitze (2), überragt wird.

6. Bohrwerkzeug nach einem der Ansprüche 1 bis 5, **dadurch gekennzeichnet, dass** sich die senkrecht zur Längserstreckung des Schaftes (21) verlaufenden Querschnittsflächen des Schaftes (21) zu beiden Enden des Schaftes (21) hin verjüngen.

7. Bohrwerkzeug nach Anspruch 6, **dadurch gekennzeichnet, dass** die grösste Querschnittsfläche im mittleren Bereich des Schaftes (21) dem 1,1- bis 1,3-fachen der kleinsten Querschnittsflächen in den Endbereichen des Schaftes (21) entspricht.

## Claims

1. Drilling tool for producing undercuts in a prefabricated pocket hole bore (26), having an essentially cylindrical shaft (1, 21), an insert end (3, 23) which is against the drilling direction coaxially adjacent to the shaft (1, 21), and a plurality of cutting elements (5, 25) which radially protrude the shaft (1, 21) and which are arranged along the longitudinal extent of the shaft (1, 21) in a line one behind the other, **characterised in that** the size of the gaps (A2, A3, A4, A(N-1), AN) between two respective adjacent cutting elements (5, 25) closer to the insert end (3, 23) is larger than the size of the gaps (A1, A2, A3, A4, A(N-1)) between two respective adjacent cutting elements (5, 25) further away from the insert end (3, 23).

2. Drilling tool according to Claim 1, **characterised in that** the size of the largest gap (AN) between two respective adjacent cutting elements (5, 15) equals between 1.5 and 4 times the size of the smallest gap (A1) between two respective adjacent cutting elements (5, 25).

3. Drilling tool according to Claim 1 or 2, **characterised in that** the size of the radial protrusion (R) of the cutting elements (5, 25) relative to the shaft (1, 21) equals between 0.05 and 0.2 times the diameter of the shaft (1, 21).

4. Drilling tool according to one of Claims 1 to 3, **characterised in that** the cutting elements (5) are arranged in a strip (7) which is insertible into a correspondingly designed recess (12) of the shaft (1).

5. Drilling tool according to one of Claims 1 to 4, **characterised in that** the end surface (13) of the shaft (1) at the drilling side is protruded in the drilling direction by a drill tip (2) which is relative to the shaft (1) and the insert end (3) arranged eccentrically and diametrically opposite the cutting elements (5).

6. Drilling tool according to one of Claims 1 to 5, **characterised in that** the cross-sectional surfaces of the shaft (21), which extend perpendicularly to the longitudinal extent of the shaft (21), narrow towards both ends of the shaft (21).

7. Drilling tool according to Claim 6, **characterised in that** the largest cross-sectional surface corresponds in the central area of the shaft (21) with between 1.1 and 1.3 times the smallest cross-sectional surfaces in the end areas of the shaft (21).

## Revendications

1. Outil de forage pour la réalisation de contre-dépouilles dans un trou borgne préforé (26), comprenant une tige sensiblement cylindrique (1, 21), une extrémité insérable (3, 23) raccordée coaxialement à la tige (1, 21) à l'opposé de la direction de forage, et plusieurs corps de coupe (5, 25) qui dépassent radialement de la tige (1, 21) et sont disposés les uns derrière les autres sur une rangée le long de l'extension longitudinale de la tige (1, 21), **caractérisé en ce que** la valeur des distances respectives (A2, A3, A4, A(N-1), AN) entre deux corps de coupe voisins (5, 25) plus proches de l'extrémité insérable (3, 23) est supérieure à la valeur des distances respectives (A1, A2, A3, A4, A(N-1)) entre deux corps de coupe voisins (5, 25) plus éloignés de l'extrémité insérable (3, 23).

2. Outil de forage selon la revendication 1, **caractérisé en ce que** la valeur de la plus grande distance (AN) entre deux corps de coupe voisins (5, 25) correspond à 1,5 à 4 fois la plus petite distance (A1) entre deux corps de coupe voisins (5, 25).

3. Outil de forage selon la revendication 1 ou 2, **caractérisé en ce que** la valeur du débordement radial (R) des corps de coupe (5, 25) par rapport à la tige (1, 21) correspond à 0,05 à 0,20 fois le diamètre de la tige (1, 21).

4. Outil de forage selon une des revendications 1 à 3, **caractérisé en ce que** les corps de coupe (5) sont disposés dans une barrette (7) qui peut être insérée dans un renfoncement (12) de conformation correspondante de la tige (1).

5. Outil de forage selon une des revendications 1 à 4, **caractérisé en ce que** la face frontale côté direction de forage (13) de la tige (1) est dépassée, dans la direction de forage, par une pointe de forage (2) excentrée par rapport à la tige (1) et à l'extrémité insérable (3) et diamétralement opposée aux corps de coupe (5).

6. Outil de forage selon une des revendications 1 à 5, **caractérisé en ce que** les surfaces transversales de la tige (21) s'étendant perpendiculairement à l'extension longitudinale de la tige (21) se rétrécissent des deux côtés de la tige (21).

7. Outil de forage selon la revendication 6, **caractérisé en ce que** la plus grande surface transversale située dans la zone médiane de la tige (21) correspond à 1,1 à 1,3 fois les plus petites surfaces transversales situées dans les zones extrêmes de la tige (21).
